# EUROPÄISCHE PATENTSCHRIFT

(11) **EP 3 361 017 B1**
(45) Veröffentlichungstag und Bekanntmachung des Hinweises auf die Patenterteilung: **19.01.2022**
(21) Anmeldenummer: 17155374.6
(22) Anmeldetag: 09.02.2017
(51) Int. Cl.: E03D 11/14, E03C 1/322, F16B 37/08

(54) **BEFESTIGUNGSVORRICHTUNG**
ATTACHMENT DEVICE
DISPOSITIF DE FIXATION

(43) Veröffentlichungstag der Anmeldung: 15.08.2018
(73) Patentinhaber: Geberit International AG, 8645 Jona (CH)
(72) Erfinder: ZWICKER, Maurus, 8733 Eschenbach (CH)
(74) Vertreter: Piticco, Lorena

(56) Entgegenhaltungen:
- EP-A1- 2 985 477
- DE-U1-202012 104 847
- FR-A1- 2 640 336
- US-A- 2 789 458

## Beschreibung

### TECHNISCHES GEBIET

Die vorliegende Erfindung betrifft eine Befestigungsvorrichtung für einen Gewindestab einer Sanitärbefestigung, bspw. zur Montage eines Keramikteils wie einer Toilettenschüssel, nach dem Oberbegriff des Anspruchs 1.

### STAND DER TECHNIK

Die Montage von schweren Keramikteilen wie Toilettenschüsseln wird gemäss der EP 1 312 589 mit Befestigungsvorrichtung vereinfacht, welche über ein Winkelgetriebe von seitlich aussen antreibbar ist. Der bekannte Beschlag zeichnet sich dadurch aus, dass er über weite Strecken der aufnehmenden Gewindestande schiebbar und dann positionsgenau in Gewindeeingriff bringbar ist, so dass lediglich der letzte Abschnitt des Gewindestabs vor der Montagelage über das Winkelgetriebe verhältnismässig langsam vortriebbar final festgezogen werden muss. Der bekannte Beschlag hat jedoch den Nachteil, dass die Kontrolle über den Gewindeeingriff mittels eines Federmittels erreicht wird, was sich als unzuverlässig herausgestellt hat. Die Druckschrift FR2640336A, die den nächstkommenden Stand der Technik abbildet, zeigt eine Mutter aus zwei Schwenksegmenten mit innenliegendem Gewinde und eine Betätigungseinrichtung, deren Innenkontur der Aussenkontur der Mutter entspricht. Die in die Betätigungseinrichtung eingeschobene Mutter kann bei aufgespreizten Schwenksegmente auf eine Gewindestange aufgeschoben und anschliessend, nach dem Zusammendrücken der Schwenksemente durch Verschieben der Betätigungseinrichtung, mittels Rotation verspannt werden. Der Formschluss zwischen Mutter und Betätigungseinrichtung kann verkanten.

### DARSTELLUNG DER ERFINDUNG

Ausgehend von diesem Stand der Technik liegt der Erfindung eine Aufgabe zugrunde, eine Befestigungsvorrichtung eingangs genannter Art anzugeben, welcher diese Nachteile des Standes der Technik überwindet.

Diese Aufgabe wird durch den Gegenstand gemäss Anspruch 1 gelöst. Demgemäss umfasst eine Befestigungsvorrichtung für einen Gewindestab einer Sanitärbefestigung, bspw. eine Toilettenschüssel oder eines Lavabos, ein Gehäuse und eine Mutter, welche im Gehäuse angeordnet ist. Die Mutter ist hierbei um eine Abtriebsachse oder Längsachse der Befestigungsvorrichtung drehbar im Gehäuse gelagert. Gleichzeitig ist die Mutter entlang der Abtriebsachse verschieblich im Gehäuse gelagert, nämlich zwischen einer Eingriffslage und einer Freigabelage. In der Eingriffslage liegt die Mutter bei eingesetztem Gewindestab so, dass sie im Gewindeeingriff mit dem Gewindestab ist. In der Freigabelage liegt die Mutter bei eingesetztem Gewindestab so, dass sie nicht im Gewindeeingriff mit dem Gewindestab ist, sodass die Befestigungsvorrichtung rasch über den Gewindestab schiebbar ist. Die besagte Mutter ist aus zwei oder mehr relativ zueinander bewegbar, insbesondere verschwenkbar angeordneten Segmenten gebildet, wobei die zwei oder mehr Segmente eine sich um die Abtriebsachse erstreckende Aufnahme für den Gewindestab bilden. Der Gewindestab ist durch diese Aufnahme hindurchführbar, entweder unter Gewindeeingriff mit der Mutter oder ohne, je nach Lage der Mutter. Mindestens eines der zwei oder mehr Segmente ist als Gewindesegment mit einem Segmentinnengewinde ausgebildet; die Aufnahme ist also ein Gewindeloch, wobei das Gewinde zumindest teilweise umfangseitig auf der die Aufnahme definierenden Innenfläche der Mutter angeordnet ist. In der Eingriffslage liegt die Mutter so, dass zumindest das oder die Gewindesegmente derart relativ zueinander angeordnet sind, dass ein Gewindeeingriff bei auf den Gewindestab aufgesetzter Befestigungsvorrichtung vorliegt. In der Freigabelage liegt die Mutter in der Spreizlage und gibt einen eingesetzten Gewindestab aus dem Gewindeeingriff frei. Weiter umfasst die Befestigungsvorrichtung ein Betätigungselement, welches besonders bevorzugt als Winkelgetriebe ausgebildet ist und über welches die Mutter um die Abtriebsachse drehbar ist.

Die obige Aufgabe wird nun dadurch gelöst, dass die Befestigungsvorrichtung derart ausgebildet ist, dass die Mutter durch Betätigung des Betätigungselements unabhängig von dem Gewindestab aus der Freigabelage in die Eingriffslage verschiebbar ist.

Der Befestigungsvorrichtung ist also derart ausgebildet, dass durch Betätigung des Betätigungselements die Mutter aus der Freigabelage in die Eingriffslage verschiebbar ist, ohne dass der Gewindestab dazu eingesetzt sein muss; der Gewindestab kann, muss aber nicht eingesetzt sein.

Im Kontext der vorliegenden Erfindung ist der Ausdruck "*Abtriebsachse*" als Achse zu verstehen, welche bei eingesetztem Gewindestab der Längsachse des Stabes entspricht. Diese Abtriebsachse entspricht auch der Abtriebsachse des Betätigungselements. Vorzugsweise ist das Betätigungselement als Winkelgetriebe ausgebildet, sodass die Antriebsachse des Winkelgetriebes seitlich von dieser Abtriebsachse weg steht, insbesondere aber nicht notwendigerweise in senkrechter Richtung zur Abtriebsachse. Gemäss einer Weiterbildung ist die Befestigungsvorrichtung derart ausgebildet, dass die Mutter durch Betätigung des Betätigungselements unabhängig von dem Gewindestab zwischen der Freigabelage und der Eingriffslage hin- und herschiebbar ist. Dies macht die Befestigungsvorrichtung auch besonders einfach lösbar.

Das Betätigungselement umfasst eine Hülse, wobei die Hülse von aussen um die Abtriebsachse drehbar antreibbar ist und einen Hohlraum aufweist, und wobei die Mutter entlang der Abtriebsachse verschiebbar im Hohlraum der Hülse aufgenommen ist. Die Hülse kann dann von aussen angetrieben werden, wobei die Drehbewegung der Hülse auf die Mutter übertragen wird.

Bei einer bevorzugten Ausbildung des Betätigungselements als Winkelgetriebe umfasst das Winkelgetriebe die Hülse, wobei die Hülse vorzugsweise ein stirnseitig um eine den Hohlraum der Hülse angeordnetes Tellerrad aufweist, wobei die Mutter entlang der Abtriebsachse verschiebbar im Hohlraum dieser Hülse aufgenommen ist. Diese Hülse ist also die besagte Hohlachse, auf welcher endseitig, gegen die Mitte des Gehäuses, das Tellerrad befestigt ist und durch welche der Gewindestab hindurchführbar ist. Weiter umfasst das Winkelgetriebe vorzugweise auch ein von aussen antreibbares Ritzel, welches als Spanner dient und mit dem Tellerrad kämmt. Vorzugsweise steht eine Drehachse des Ritzels, die Antriebsachse, senkrecht zur Abtriebsachse, damit kann die Drehbewegung besonders einfach in die Befestigungsvorrichtung eingeleitet werden.

Das zumindest eine Gewindesegment oder mindestens eines der Gewindesegmente ist durch mindestens einen, vorzugsweise durch zwei radial zur

Abtriebsachse abragende und eine quer zur Abtriebsachse stehende und eine Schwenkachse bildende Schwenkzapfen schwenkbar in der Hülse und drehfest bezüglich einer Drehung der Hülse um die Abtriebsachse gelagert. Die die Mutter bildenden Segmente sind vorzugsweise zumindest teilweise von der Hülse umgeben. Die Mutter ist hierbei in der und relativ zur Hülse verschiebbar angeordnet, wobei die Segmente um die Schwenkachse schwenkbar ausgebildet sind, sodass die Mutter in die Spreizlage und zurück führbar ist.

Vorzugsweise weist die Hülse für jeden Schwenkzapfen eine entlang der Abtriebsachse verlaufende Ausnehmung auf. Vorzugsweise weist die Hülse mindestens oder genau eine Ausnehmung pro Schwenkzapfen auf. Diese mindestens eine Ausnehmung ist vorzugsweise als Schlitz ausgebildet, in welche mindestens eine Ausnehmung die Mutter über den mindestens einen Schwenkzapfen eingreifend relativ zur Hülse und entlang der Abtriebsachse verschiebbar gelagert ist. Durch diese Ausbildung ist das Gewindesegment am Schwenkzapfen verschwenkbar und entlang der Abtriebsachse, also entlang einer Hülsenlängsachse, in der Hülse verschiebbar. Gleichzeitig wird die Mutter bei drehender Hülse aufgrund des Schwenkzapfens mitgedreht, wobei die Hülse insbesondere über das Ritzel und das Tellerrad von aussen in Drehbewegung versetzbar ist. Insbesondere durch die entlang der Abtriebsachse verlaufende Schlitze, in welche der mindestens eine Schwenkzapfen eingreift, kann eine einfache Drehkopplung zwischen Mutter und Winkelgetriebe bereitgestellt werden, wobei die Mutter in der Hülse zwischen der Eingriffs- und der Freigabelage entlang der Schlitze, also in Längsrichtung verschieblich gelagert ist.

Gemäss einem besonders bevorzugten Ausführungsbeispiel ist die Hülse in einem Gehäuseinnenraum des Gehäuses angeordnet, wobei sich dieser Gehäuseinnenraum entlang der Abtriebsachse erstreckt und ein um die Abtriebsachse verlaufendes Gehäuseinnengewinde aufweist. Das Gewinde verläuft also helikoidal, sozusagen schraubenförmig, um die Abtriebsachse am Gehäuse entlang. Hierbei ragt der oder zumindest einer der Schwenkzapfen über die Hülse ab, wobei das Gehäuseinnengewinde und der mindestens eine Schwenkzapfen derart ausgebildet und angeordnet sind, dass der mindestens eine Schwenkzapfen durch die Hülse bis in das Gehäuseinnengewinde eingreift, sodass sich die Mutter, wenn sie sich dreht, über das Zusammenspiel zwischen dem mindestens einen Schwenkzapfen und dem Gehäuseinnengewinde relativ zur Hülse entlang der Abtriebsachse schraubt. Damit hat man einen Vorwärts- und einen Rückwärtstrieb der Mutter relativ zum Gehäuse, welcher über das Winkelgetriebe kontrollierbar ist. Vorzugweise ist die Hülse dann unverschiebbar im Gehäuse angeordnet, so dass die Mutter über den Schraubgewindeeingriff mit dem Gehäuse relativ zum Gehäuse und relativ zur Hülse über das Winkelgetriebe verschieblich zwischen der Freigabelage und der Eingriffslage hin- und her verschiebbar ist, je nach Rotationssinn, welchem man dem Winkelgetriebe über das Ritzel vorgibt.

Das Gehäuse kann eine beliebige Aussenform aufweisen. Dem Gehäuse kann insbesondere eine Ankerfunktion zukommen, d.h. es wird unter Formschluss bezüglich einer aus dem Zusammenspiel mit dem Gewindestab entstehenden Zugkraft in eine Ausnehmung der Sanitärinstallation, bspw. in eine Toilettenschüssel eingelegt. Die Sanitärinstallation kann dann bei in Freigabelage liegender Mutter durch Einführen des Gewindestabs in die Befestigungsvorrichtung (es können auch mehrere sein) rasch auf den Gewindestab gesetzt und zurechtgeschoben werden, wobei man den letzten Teil dann über Drehbetätigung und daraus folgenden Gewindeeingriff, also durch die Spannfunktion der Betätigungsvorrichtung, mittels des Winkelgetriebes final festziehen kann, indem die ganze Betätigungsvorrichtung über das Winkelgetriebe auf dem Gewindestab schraubend vorwärtsgetrieben wird.

Vorzugweise weist zumindest das zumindest eine Gewindesegment einen radial bezüglich der Abtriebsachse nach aussen ragenden Vorsprung auf, wobei die Befestigungsvorrichtung eine erste Anschlagfläche und eine beabstandet zur und gegen die erste Anschlagfläche gerichtete zweite Anschlagfläche für diesen Vorsprung bereitstellt, so dass der Vorsprung bei in Eingriffslage liegender Mutter jeweils derart an der ersten Anschlagfläche anschlägt, dass das mindestens eine Gewindesegment in einer ersten Segmentlage liegt und damit das mindestens eine Gewindesegment bei eingeführtem Gewindestab mit dem Gewindestab in Gewindeeingriff liegt. Weiter schlägt der Vorsprung bei in Freigabelage liegender Mutter derart an der zweiten Anschlagfläche an, dass das mindestens eine Gewindesegment in einer zweiten Segmentlage zu liegen kommt, so dass das mindestens eine Gewindesegment bei eingeführtem Gewindestab nicht mit dem Gewindestab in Gewindeeingriff liegt. Über diesen seitlich zur Abtriebsachse abragenden Vorsprung kann also das schwenkbar gelagerte Segment über Anschlag am Gehäuse verkippt werden. Das Segment mit Vorsprung bildet also einen zweiarmigen winkligen Hebel um die Schwenkachse. Die Verkippung oder Verschwenkung des Segments kann nun damit kontrolliert werden, dass der genannte Vorsprung über die sich im Gehäuseinnengewinde entlang der Abriebsachse verschiebend schraubende Mutter kontrolliert zum Anschlag an der ersten oder der zweiten Anschlagfläche kommt. Die Orientierung der ersten und zweiten Anschlagfläche bzw. die Ausbildung des Vorsprungs ist dann so zu wählen, dass die Verschwenkung des Gewindesegments derart ist, dass es in Eingriffslage gegen die Abtriebsachse zum Gewindeeingriff mit dem Gewindestab geschwenkt wird und in der Freigabelage in die andere Richtung verschwenkt wird.

Vorzugsweise weist der Vorsprung eine dritte Anschlagfläche zum Anschlag an der ersten Anschlagfläche und eine der dritten Anschlagfläche gegenüberliegende vierte Anschlagfläche zum Anschlag an der zweiten Anschlagfläche auf.

Die erste Anschlagfläche kann an oder in der Hülse oder am Gehäuse angeordnet sein.

Die zweite Anschlagfläche kann an oder in der Hülse oder am Gehäuse angeordnet sein.

Bevorzugt ist, dass die Hülse unverschiebbar entlang und drehbar um die Abtriebsachse im Gehäuse angeordnet ist.

Vorzugweise sind diese erste bis vierte Anschlagflächen flach ausgebildet. Andere Ausbildungen sind möglich.

Vorzugsweise verläuft die erste Anschlagfläche senkrecht zur Abtriebsachse und die dritte Anschlagfläche winklig mit einem Winkel kleiner 90° zu einer Längserstreckung des entsprechenden mindestens einen Gewindesegments. Der Querschnitt des Segments ist dann abschnittsweise, d.h. innwendig eine zusammengedrückte L-Form.

In einer Weiterbildung können die dritte Anschlagfläche und die vierte Anschlagfläche geneigt (oder anders ausgedrückt: winklig, also nicht parallel) zueinander stehen und/oder die erste Anschlagfläche und die zweite Anschlagfläche können parallel zueinander stehen. Es versteht sich, dass das Zusammenspiel der Anschlagflächen so ausgebildet ist, dass der Gewindeeingriff mit einem eingesetzten Gewindestab beim Anschlagen der ersten und dritten Anschlagfläche hergestellt und beim Anschlagen der zweiten und vierten Anschlagfläche aufgehoben wird.

In einer Weiterbildung ist(sind) die erste, die zweite, die dritte und/oder die vierte Anschlagfläche als Konusfläche(n) ausgebildet. Dies erlaubt einen flächenmässig grossen Kontakt, was optimal für die Kraftübertragung ist.

Das mindestens eine Gewindesegment kann zumindest bei in Eingriffslage liegender Mutter parallel zur Abtriebsachse durch das Tellerrad über die Hülse hinausragen.

Vorzugsweise ist die Befestigungsvorrichtung so ausgebildet, dass die Mutter in der Eingriffslage näher an einer Mitte des Gehäuses bezüglich der Abtriebsachse liegt als in der Freigabelage. Dies ist vorteilhaft, da bei Gewindeeingriff in Eingriffslage in der Regel höhere Kräfte auftreten, welche durch eine mittigere Lage besser auf das Gehäuse ableitbar sind.

Vorzugsweise ist das Gehäuse weiter so ausgebildet, dass es in die Sanitärinstallation, bspw. die Toilettenschüssel, einlegbar ist, wodurch ein Formschluss gebildet ist, über welchen die auftretenden Kräfte aufgefangen werden.

Nach einem besonders bevorzugten Ausführungsbeispiel ist am eingrifflageseitigen Ende des Gehäuseinnengewindes eine umlaufende und geschlossene Nut gebildet. Diese Ringnut ist derart ausgebildet, dass darin der mindestens eine Schwenkzapfen bei in Eingriffslage liegender Mutter verschiebungsfrei bezüglich der Hülse bzw. der Längsachse mit der Mutter in einem ersten Rotationssinn rotieren kann. Wenn also die Mutter in Gewindeeingriff ist und die Befestigungsvorrichtung über das Winkelgetriebe auf dem Gewindestab entlangeschoben wird, rotiert die Mutter mit dem mindestens einen Schwenkzapfen in die Ringnut eingreifend ortsfest relativ zur Abriebsachse in dieser Ringnut.

Damit der mindestens eine Schwenkzapfen zuverlässig den Weg bei entgegengesetzter Rotation, welche die Verlagerung der Mutter aus der Eingriffslage in die Freigabelage bewirkt, aus dieser Ringnut findet, kann ein Federmittel vorgesehen sein. Dieses Federmittel kann also zum Rückführen des mindestens einen Schwenkzapfens aus der umlaufenden Nut in das Gehäuseinnengewinde bei Rotation mit einem dem ersten Rotationssinn entgegengesetzten zweiten Rotationssinn der Mutter vorgesehen sein.

Anstelle oder zusätzlich zu diesen Federmitteln wäre auch eine Rampe oder eine sonstige Schrägfläche denkbar.

Am freigabelageseitigen Ende des Gehäuseinnengewindes kann ein Anschlag bereitgestellt sein, bspw. indem die Gewindenut des Gehäuseinnengewindes blind endet. Es kann jedoch auch dort eine entsprechend wirkende Ringnut vorgesehen sein.

Vorzugsweise ist der mindestens eine Schwenkzapfen fest an einem ersten Gewindesegment angeordnet ist und ein dem ersten Gewindesegment gegenüber angeordnetes zweites Gewindesegment mit einer korrespondierenden Ausnehmung versehen, wobei der mindestens eine Schwenkzapfen in diese Ausnehmung eingreift und so das zweite Gewindesegment um die gleiche Schwenkachse schwenkbar relativ zum ersten Gewindeelement am mindestens einen Schwenkzapfen gelagert ist. Es braucht also nicht jedes Gewindesegment einen eigenen Schwenkzapfen. Dieser Schwenkzapfen kann direkt auf das Gewindesegment aufgeformt sein.

Vorzugsweise ist das Gewindesegment mit dem Vorsprung und dem Schwenkzapfen, falls letzterer vorhanden, einstückig ausgebildet.

Besonders bevorzug ist die Mutter aus zwei gegeneinander verschwenkbaren Gewindesegmenten als zweiteilige Spreizmutter ausgebildet. Die Gewindesegmente bilden zusammen dann eine Ausnehmung von kreisförmigem Querschnitt. Die Gewindesegmente können die Ausnehmung vollständig oder nur teilweise umfangseitig umgeben. Bevorzugt ist ein möglichst vollständiges Umfangen, damit ein möglichst grossflächiger Gewindeeingriff mit dem Gewindestab ermöglicht ist. Die Spreizmutter kann vorgespannt sein, so dass sie die Eingriffslage oder die Freigabelage sucht.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Ausführungsform der erfindungsgemässen Befestigungsvorrichtung, wobei die Befestigungsvorrichtung auf einen Gewindestab aufgesetzt ist;
- Fig. 2: eine vertikale Schnittdarstellung der Ausführungsform nach Figur 1, wobei einige Teile der Befestigungsvorrichtung der Übersichtlichkeit halber weggelassen sind;
- Fig. 3: eine horizontale Schnittdarstellung der Ausführungsform nach Figur 1, wobei einige Teile der Befestigungsvorrichtung der Übersichtlichkeit halber weggelassen sind;
- Fig. 4: eine Seitenansicht der Befestigungsvorrichtung nach Figur 1;
- Fig. 5: die horizontale Schnittdarstellung nach Figur 3, wobei weitere Teile der Befestigungsvorrichtung eingesetzt sind;
- Fig. 6: eine perspektivische Detailansicht einer vertikalen Teilschnittdarstellung durch die Befestigungsvorrichtung 1 nach Figur 1, wobei eine Mutter der Befestigungsvorrichtung in Freigabelage liegt;
- Fig. 7: eine perspektivische Detailansicht einer vertikalen Teilschnittdarstellung durch die Befestigungsvorrichtung nach Figur 1, wobei die Mutter der Befestigungsvorrichtung in Eingriffslage liegt;
- Fig. 8: die perspektivische Detailansicht nach Figur 7, wobei eine Hülse der Befestigungsvorrichtung der Übersichtlichkeit halber weggelassen ist, sodass der Blick auf die Mutter frei ist;
- Fig. 9: eine seitliche vertikalen Teilschnittdarstellung durch die Befestigungsvorrichtung nach Figur 1, wobei die Mutter in Freigabelage liegt;
- Fig. 10: eine Untenansicht einer horizontalen Teilschnittdarstellung durch die Befestigungsvorrichtung nach Figur 1 wobei die Mutter in Freigabelage liegt;
- Fig. 11: eine seitliche vertikalen Teilschnittdarstellung durch die Befestigungsvorrichtung nach Figur 9, wobei die Mutter in Eingriffslage liegt; und
- Fig. 12: die Untenansicht einer horizontalen Teilschnittdarstellung durch die Befestigungsvorrichtung nach Figur 10, wobei die Mutter in Eingriffslage liegt.

### BESCHREIBUNG BEVORZUGTER AUSFÜHRUNGSFORMEN

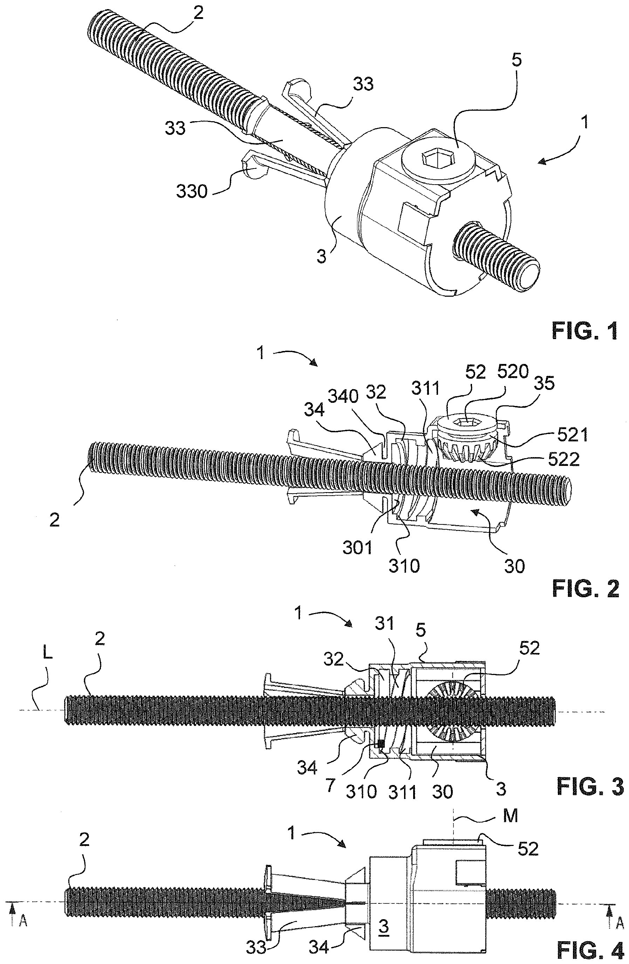

Anhand der Figuren 1 bis 12 wird nun eine bevorzugte Ausführungsform der erfindungsgemässen Befestigungsvorrichtung 1 beschrieben.

**Figur 1** zeigt die Befestigungsvorrichtung 1 in einer perspektivischen Ansicht und in zusammengesetzter Konfiguration, wobei die Befestigungsvorrichtung 1 ein Gehäuse 3 umfasst und auf einen Gewindestab 2 gesetzt ist, oder in anderen Worten: Der Gewindestab 2 ist die Befestigungsvorrichtung 1 eingeführt. Das Gehäuse 3 erstreckt sich entlang einer Längsachse L (s. Fig. 3) des Gewindestabs 2 und weist eine im Wesentlichen zylindrische Form mit einer im Wesentlichen kreisförmiger Querschnittsform auf. Im distalen Bereich, links in Figur 1, sind distal abragende Konusabschnitte 33 mit nach aussen abstehenden freien Enden sichtbar, welche jeweils distal mit einer Abwinklung 330 abschliessen. Ein Winkel zwischen einer generellen Längserstreckung des Konusabschnitts 33 und der zugehörigen Abwinklung 330 beträgt etwa 90°. In Figur 1 sind vier Konusabschnitte 33 dargestellt, welche in distaler Richtung radial voneinander weglaufen. Durch diese einer Trichterform folgenden Aufspreizung der Konusabschnitte 33 ist es besonders einfach, die Befestigungsvorrichtung 1 auf den Gewindestab 2 zu setzen. Die Konusabschnitte 33 sind weiter an das Gehäuse 3 der Befestigungsvorrichtung 1 angeformt und federelastisch am Gehäuse 3, genauer an einem Fortsatz 34 gelagert, sodass sie sich bei Druck von aussen auf das Gewinde des Gewindestabes 2 anlegen. Insbesondere können diese Konusabschnitte 33 dazu dienen, einen Übergang zwischen dem Gewindestab 2, welcher oft aus Metall geformt ist, und einer nicht weiter dargestellten Sanitärinstallation, welche üblicherweise aus Keramik bestehen kann, zu bilden. Die Abwinklungen 330 bilden dann einen radial zur Längsachse L stehenden Ring, welcher als Anschlag an der Sanitärinstallation dienen kann.

Im Allgemeinen kann die Sanitärinstallation eine Ausnehmung aufweisen, in welche die Befestigungsvorrichtung 1 einlegbar ist, sodass ein Formschluss zwischen der Sanitärinstallation und der Befestigungsvorrichtung 1 bezüglich der Zugrichtung, welche durch den Gewindestab 2 definiert wird, gebildet ist. Der Fortsatz 34 verjüngt sich konisch in distaler Richtung und weist an seinem proximalen Ende einen umlaufenden radialen Einschnitt 340 auf.

Aus dem Gehäuse 3 ragt ein Winkelgetriebe 5 (oben in Figur 1), welches über einen Innensechskantschlüssel als Betätigungselement antreibbar ist. Die Funktion des Winkelgetriebes 5 wird weiter unten genauer beschrieben.

**Figur 2** zeigt die Befestigungsvorrichtung 1 nach Figur 1 in einer Teilschnittdarstellung, wobei Teile der Übersichtlichkeit halber weggelassen wurden. Es sind lediglich das längs aufgeschnittene Gehäuse 3 mit den distal, also nach links in Figur 2 wegragenden Konusabschnitten 33 mit eingesetztem Gewindestab 2 und ein als Spanner nutzbares Ritzel 52 des Winkelgetriebes 5 dargestellt. Figur 2 zeigt, dass das Ritzel 52 in einer Ausnehmung 35 des Gehäuses 3 gelagert ist, wobei das Ritzel 52 drehbar im Gehäuse 3 aufgenommen ist. Dazu weist das Ritzel 52 eine um eine Achse M (s. Fig. 4) laufende Ringnut 521, wobei die Achse M durch eine für den Innensechskantschlüssel (oder allgemeiner für ein Drehwerkzeug) vorgesehene Ausnehmung 520 definiert ist. In diese Ringnut 521 greift das das Gehäuse 3 das Ritzel 52 drehbar um die Achse M feststellend ein. Das Ritzel 52 ragt also von aussen zugänglich in ein Gehäuseinneres 30 ein, sodass eine Drehbewegung mittels eines Drehwerkzeugs von aussen in das Gehäuseinnere 30 übertragen werden kann. An der Unterseite, also zum Gewindestab 2 hingerichtet, weist das Ritzel 52 eine angeschrägte Verzahnung 522 auf.

Im Gehäuseinneren 30 befindet sich distal vom Ritzel 52 ein an der Gehäuseinnenwand angeordnetes Gehäuseinnengewinde 31, welches sich zwischen dem durch die distale Gehäusewand 301 gebildeten distalen Ende des Gehäuseinnenraumes 30 und dem Ritzel 52 entlang des kreisrunden Umfangs des betreffenden Gehäuseabschnittes um die Längsachse des Gehäuses 3, welche deckungsgleich mit der Längsachse L des Gewindestabes 2 ist, erstreckt. Das Gehäuseinnengewinde 31 weist ein distales, ritzelfernes Ende 310 und ein diesem distalen Ende gegenüberliegendes, also ritzelnah angeordnetes proximales Ende 311 auf. Am distalen Ende 310 des Gehäuseinnengewindes 31 ist eine geschlossene, um die Längsachse des Gehäuses 3 laufende und geschlossene Ringnut 32 vorgesehen.

**Figur 3** zeigt in einer Ansicht von unten einen Horizontalschnitt der Situation gemäss Figur 2 mit dem sich an der Gehäuseinnenwand entlangschraubenden Gehäuseinnengewinde 31. Am distalen Ende 310 des Gehäuseinnengewindes 31 ist eine im Durchmesser dem Gehäuseinnengewinde 31 entsprechende, senkrecht zur Längsachse des Gehäuses 3 stehende Ringnut 32 angeordnet. Die Querschnittsform der Nut 32 entspricht der Querschnittsform der Spur des Gehäuseinnengewindes 31, wobei das Gehäuseinnengewinde 31 derart in die besagte Ringnut 32 mündet, sodass ein im Kreis in der Ringnut 32 um die Gehäuselängsachse rotierender Nutenstein durch entsprechende Lenkung durch die besagte Mündung aus der Ringnut 32 in die Spur des Gehäuseinnengewindes 31 übertreten kann. Es kann hierbei ein schematisch in der Figur 3 dargestelltes Federelement 7 in diesem Mündungsbereich angeordnet sein, welches den Übertritt des in der Ringnut 32 in Gegenrichtung rotierenden Elementes in das Gehäuseinnengewinde 31 erleichtert.

**Figur 4** zeigt eine seitliche Ansicht auf das geschlossene Gehäuse 3 mit eingesetztem Gewindestab 2 gemäss Figur 2. Zudem zeigt Figur 4, wie der Schnitt gemäss Figur 3 geführt ist und die Achse M, die Antriebsachse, ist gezeigt.

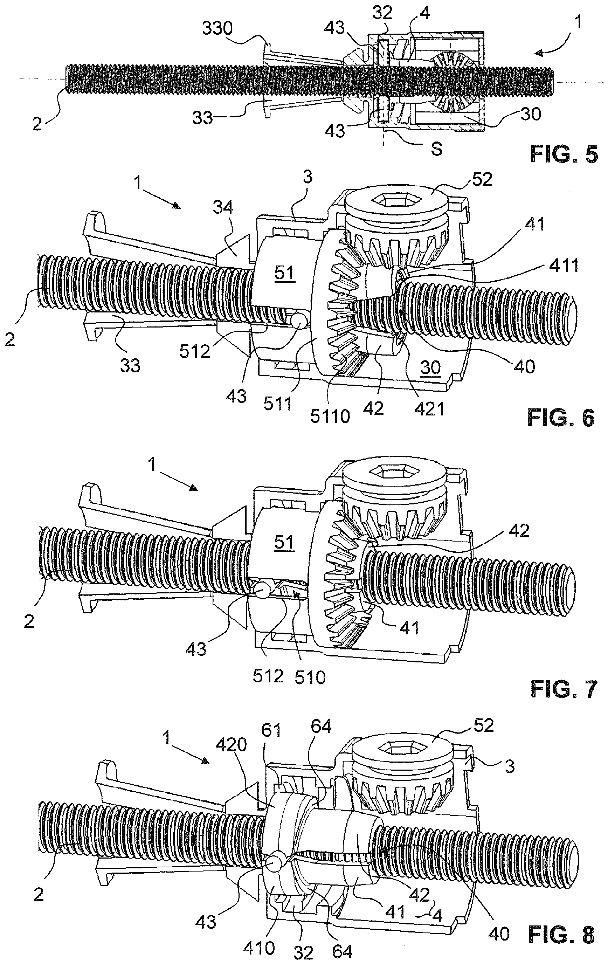

**Figur 5** zeigt die Befestigungsvorrichtung 1 gemäss Figur 3, wobei nun eine Mutter 4 eingesetzt ist. Diese Mutter 4 ist als 2-teilige Spreizmutter ausgebildet.

Anhand der **Figuren 6** bis **8** ist erkennbar, dass die Mutter 4 ein erstes Gewindesegment 41 mit einem ersten Vorsprung 410 und ein zweites Gewindesegment 42 mit einem zweiten Vorsprung 420 aufweist. Das erste Segment 41 und das zweite Segment 42 sind jeweils teilrohrförmig ausgeformt, bilden zusammen eine Aufnahme 40 (s. Fig. 6) für den Gewindestab 2 und weisen das erste Segmentinnengewinde 411 bzw. das zweite Segmentinnengewinde 421 auf. Diese beiden Segmentinnengewinde 411, 421 sind ausgebildet, um bei sich in einer ersten Segmentlage in Eingriff mit dem Gewindestab 2 befindlichen Segmenten 41, 42 mit dem Gewinde des Gewindestabs 2 zu kämmen.

Figuren 6 bis 8 zeigen zudem weitere Teile des Winkelgetriebes 5, nämlich eine die Längsachse des Gehäuses 3 schliessende, und hierbei im Gehäuse 3 gelagerte Hülse 51 mit einem rohrförmigen Abschnitt 513 und einem proximal angeordneten Tellerrad 511. Das Tellerrad 511 weist eine proximal gerichtete und mit der Verzahnung 522 des Ritzels 52 korrespondierende Verzahnung 5110 auf. Das Ritzel und die Hülse 51 sind nun derart ausgebildet und angeordnet, dass deren Verzahnungen 522 bzw. 5110 gegeneinander gerichtet sind und ineinander greifen, sodass durch Drehen des Ritzels 52 mittels des Drehwerkzeuges eine Drehbewegung um die Achse M von aussen über das Ritzel 52 in eine Drehbewegung der Hülse 51 um die Achse L umgelenkt wird. Die Hülse 51 definiert also gewissermassen die Abtriebsachse, wobei das Ritzel 52 die Antriebsachse definiert. Die Hülse 51 ist unverschiebbar bezüglich der Achse L zwischen dem Ritzel 52 und der distalen Gehäuseinnenwand 301 des Gehäuses 3 gelagert.

Figur 6 zeigt weiter wie das erste Segment 41 und das zweite Segment 42 der Mutter 4 proximal in der zweiten Segmentlage liegen und entsprechend nach aussen von dem Gewindestab 2 weggeklappt angeordnet sind. In dieser Freigabelage liegen die ersten und zweiten Segmente 41, 42 also in der zweiten Segmentlage und es findet kein Eingriff zwischen dem Gewinde des Gewindestabes 2 und dem ersten Segmentinnengewinde 411 und dem zweiten Segmentinnengewinde 421 statt. Der Gewindestab 2 ist also frei entlang seiner Längsachse in der Befestigungsvorrichtung 1 verschiebbar. In diesem Zustand kann also die Befestigungsvorrichtung 1 schnell auf dem Gewindestab 2 und her verschoben werden. Damit ist die Sanitärinstallation schnell und einfacher montierbar. In vielen Fällen kann die Montage durch eine einzelne Person vorgenommen werden.

In den Figuren 6 und 7 ist ein Längsschlitz 512 im rohrförmigen Abschnitt 513 der Hülse 51 erkennbar, in welchen ein Schwenkzapfen 43 der Mutter 4 eingreift. Wie aus Figur 5 erkennbar ist, ragen zwei Schwenkzapfen 43 diametral von der Mutter 4 ab und bilden eine Schwenkachse S aus, um welche die ersten und zweiten Segmente 41, 42 gegeneinander verschwenkbar sind und welche senkrecht zur Achse L liegt. Entsprechend weist auch die Hülse 51 zwei gegenüberliegende, parallel verlaufende Schlitze 512 im rohrförmigen Abschnitt 513 auf.

Diese Schwenkzapfen 43 sind an das erste Segment 41 angeformt, wobei das zweite Segment 42 zwei mit der Aussenkontur des Schwenkzapfen 43 korrespondierende Ausnehmung 430 aufweist, in welchen bei zusammengesetzter Mutter 4 die Schwenkzapfen 43 aufgenommen werden. Die Mutter 4 lagert also mit den Schwenkzapfen 43 in die Schlitze 512 eingreifend und entlang der Achse L verschieblich in der Hülse 51. In Figur 6 sind die Schwenkzapf 43 am proximalen Ende der Schlitze 512 und stossen dort an; die Segmente 41, 42 sind voneinander weg geschwenkt und die Mutter 4 liegt in der Freigabelage.

Die Figur 7 zeigt die gleichen Teile wie die Figur 6, wobei hier die Schwenkzapfen 43 in den Schlitzen 512 der Hülse 51 in distaler Richtung in eine Eingriffslage geschoben sind. Die in der Freigabelage nach Figur 6 durch eine mittige Öffnung im Tellerrad über das Tellerrad 511 hinausragenden Abschnitte der ersten und zweiten Segmente 41, 42 sind in der Eingriffslage gemäss Figur 7 distal zurückgezogen, sodass sich die Mutter 4 im Wesentlichen innerhalb der Hülse 51 befindet. Wie aus der Figur 7 erkennbar ist, sind dann das erste Segment 41 und das zweite Segment 42 in der ersten Segmentlage und derart orientiert, dass sie im Wesentlichen parallel zueinander verlaufen und mit ihren Segmentinnengewinden 411, 421 in den Gewindestab 2 eingreifen. In der Situation gemäss Figur 7 ist die Befestigungsvorrichtung 1 also nicht mehr frei auf dem Gewindestab 2 verschiebbar.

Im Weiteren wird nun erklärt, welcher Bewegungsvorgang zu den Situationen der in Freigabelage liegenden Mutter 4 gemäss Figur 6 und der in Eingriffslage liegenden Mutter 4 gemäss Figur 7 führt. Hierzu greifen die Schwenkzapfen 43 nicht nur in die Schlitze 512 ein sondern ragen über diese hinaus und reichen bis in das Gehäuseinnengewinde 31, um ebendort einzugreifen. Damit ist die Bewegung der Schwenkzapfen 43 nicht nur durch den Schlitz 512 sondern auch durch das Gehäuseinnengewinde 31 bestimmt.

Figur 8 zeigt die Situation gemäss Figur 7, wobei der Übersichtlichkeit halber die Hülse 51 samt Tellerrad 511 weggelassen sind. Man sieht in Figur 8 die Mutter 4, welche mit den in der ersten Segmentlage liegenden Segmenten 41 und 42 in den Gewindestab 2 eingreift, wobei die radial abragenden Schwenkzapfen 43 in das Gehäuseinnengewinde 31 des Gehäuses 3 eingreifen. Durch den Eingriff der Schwenkzapfen 43 in das Gewinde 31 sind die Schwenkzapfen 43 in dem Gewinde 31 durch Drehbewegungen entlang einer Längsachse L des Gewindestabes 2 schraubbar. Diese Schraubbewegung hat zur Folge, dass sich die Mutter 4 ebenfalls entlang der Längsachse des Gewindestabes 2 aus der Eingriffslage gemäss Figur 8 im die Freigabelage gemäss Figur 6 bewegt.

Gemäss dem bevorzugten Ausführungsbeispiel ist bei voller Fahrt entlang des gesamten Gewindes 31 eine 180° Drehung der Mutter 4 vorgesehen, sodass der nach vorne in Figur 6 ragende Schwenkzapfen 43 in den Figuren 7 und 8 nach hinten ragt. Das in Figur 6 obenliegende erste Segment 41 liegt entsprechend in den Figuren 7 und 8 unten. Ein distales Ende des Gehäuseinnengewindes 31 stellt hierbei das eingriffslageseitige Ende 310 des Gehäuseinnengewindes 31 dar. Das gegenüberliegende freigabelageseitige Ende 311 des Gehäuseinnengewindes 31 ist ebenfalls sichtbar. Wenn man nun also das Ritzel 52 drehbetätigt, so rotiert die Hülse 51 um die Achse L und aufgrund des Formschlusses in Drehrichtung zwischen den Schlitzen 512 der Hülse 51 und den Schwenkzapfen 43 werden die Schwenkzapfen 43 durch die Drehbewegung der Hülse 51 mitgenommen und schrauben sich im Gewinde 31 und entlang des jeweiligen Schlitzes 512 der L-Achse entlang je nach Drehsinn entweder aus der Eingriffslage in die Freigabelage oder umgekehrt.

Befinden sich die Schwenkzapfen 43 in der Freigabelage nach Figur 6, also proximal in den Schlitzen 512, so stehen sie dort an und eine weitere Drehung mit diesem Drehsinn ist nicht mehr möglich, weshalb auch das Ritzel 52 blockiert ist. Die Befestigungsvorrichtung 1 kann frei auf dem Gewindestab 2 verschoben werden. Dreht man das Ritzel 52 in die andere Richtung, so fährt die Mutter 4 aufgrund der im Gehäuseinnengewinde 31 um die L-Achse schraubend in die distale Richtung getriebenen Schwenkzapfen 43 in die Eingriffslage, wobei die ersten und zweiten Segmente 41, 42 in Gewindeeingriff mit dem Gewindestab 2 gebracht werden. Am eingriffslageseitigen Ende des Gewindes 31 ist die Ringnut 32 angeordnet, in welche die Schwenkzapfen 43 in Eingriffslage einfahren und dort in freien Kreisbewegungen weiter rotierbar sind, sodass sich die Befestigungsvorrichtung 1 aufgrund der Drehbetätigung des Ritzels 52 auf dem Gewindestab 2 entlang schraubt und ein finales Festziehen möglich ist. Dadurch können schraubend Strecken auf dem Gewindestab zurückgelegt werden. Will man nun die Befestigungsvorrichtung 1 zurückziehen, so dreht man das Ritzel 52 in die Gegenrichtung, sodass die Mutter 4 aus der Eingriffslage die Freigabelage gebracht wird, und, wenn das Ritzel 52 blockiert, die Befestigungsvorrichtung 1 mit in der zweiten Segmentlage liegenden Segmenten 41, 42 ohne Gewindeeingriff frei auf dem Gewindestab 2 verschiebbar ist.

Im Weiteren wird nun beschrieben, wie die gegenseitige Verschwenkung des ersten Segmentes 41 und des zweiten Segmentes 42 um die Schwenkzapfen 43 zustande kommen kann. Hierzu sind jeweils die Vorsprünge 410 und 420 vorgesehen, welche bspw. in der Figur 8 zu sehen sind.

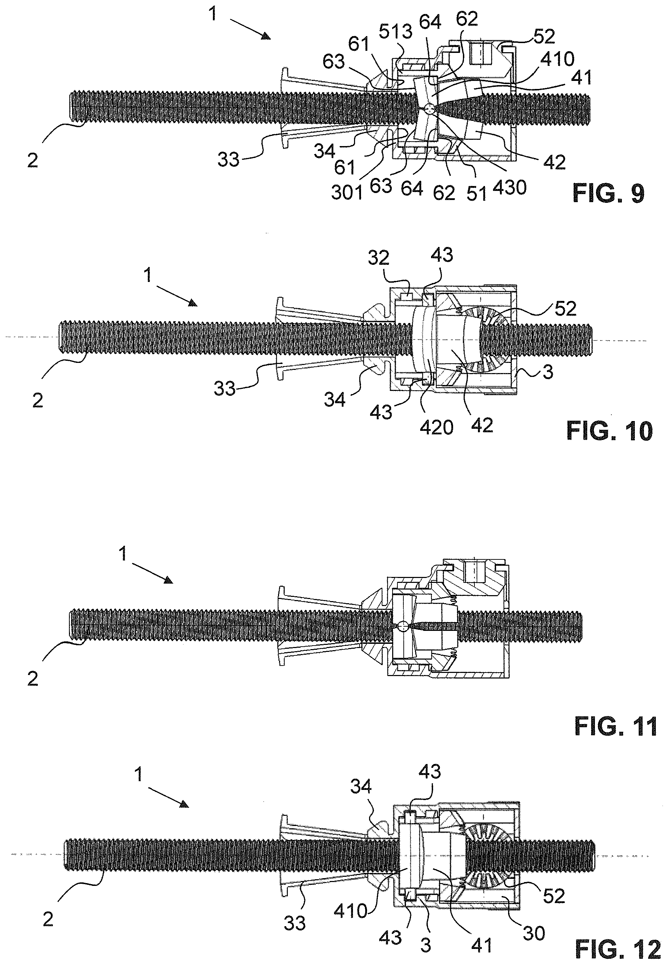

Die **Figur 9** zeigt einen Querschnitt durch die gesamte Befestigungsvorrichtung 1, wobei auch die Hülse 51, nicht aber die Mutter 4 geschnitten ist. Die Hülse 51 weist den distal abragen und an der distal Gehäusewand 301 anstehenden rohrförmigen Abschnitt 513 auf. Das Tellerrad 511 ist so ausgeformt, dass es einen Hohlraum 510 des Rohabschnitts 513 in der lichten Weite an der proximalen Seite der Hülse 51 etwas einengt, sodass dort eine Stufe mit einem distal gerichteten Anschlag gebildet ist. Diese Einengung wird also durch eine Stufe erreicht, welche senkrecht zur Rohrachse verläuft. Diese Stufe stellt eine zweite distal gerichtete Anschlagfläche 62 bereit. Die Hülse 51 ist in die distale Richtung offen und trifft dort auf die distale Abgrenzungswand 301 des Gehäuses 3. Der sich innerhalb des Rohabschnittdurchmessers befindliche Teil der distalen Gehäuseinnenwand bildet hierbei eine proximal gerichtete erste Anschlagfläche 61. Diese erste Anschlagfläche 61 und die zweite Anschlagfläche 62 sind einander parallel gegenüber an, verlaufen radial zu Längsachse L und sind auf Grund der Ausbildung der Befestigungsvorrichtung 1 jeweils als Ringe ausgeformt.

Zwischen diesen Ringflächen 61, 62 sind die Vorsprünge 410 und 420 angeordnet, wobei die Vorsprünge 410, 420 im Wesentlichen senkrecht zum ersten Segment 41 bzw. zum zweiten Segment 42 abragen und einen distalen Abschluss der Segmente 41, 42 bilden. Die distale Stirnfläche des Vorsprungs 410, 420 stellt eine dritte Anschlagfläche 63 bereit, welche mit der ersten Anschlagfläche 61 des Gehäuses 3 zusammenspielt. Die proximale, der distalen Fläche 63 gegenüberliegende Stirnfläche des Vorsprungs 410, 420 stellt eine vierte Anschlagfläche 64 dar, welche mit der zweiten Anschlagfläche 62 zusammenspielt. Die dritte Anschlagfläche 63 und die vierte Anschlagfläche 64 sind hierbei winklig zueinander angeordnet, d.h. sie sind nicht parallel. Die dritte Anschlagfläche 63 verläuft im Wesentlichen senkrecht zur Längserstreckung des jeweiligen Segmentes 41, 42. Die vierte Anschlagfläche 64 ist nach aussen in die proximale Richtung geneigt, d.h., dass die Vorsprünge 410, 420 in radialer Richtung dicker werden. Durch diese winklige Anordnung der dritten und vierten Anschlagfläche 63, 64, wie in Figur 9 gezeigt, kommt es im Zusammenspiel mit der ersten bzw. zweiten Anschlagfläche 61, 62 zu einer Verschwenkung der Segmente 41, 42 um die Schwenkachse S, sodass sich die ersten und zweiten Segmente 41, 42 in zweiten Segmentlage aufspreizen und sich in der ersten Segmentlage aufeinander zu zum Eingriff mit dem Gewindestab 2 bewegen.

Wird nun die Mutter in die distale Richtung in die Eingriffslage versetzt, indem die Schwenkzapfen 43 im Gehäuseinnengewinde 31 zur Mitte geführt werden, so trifft die dritte Anschlagfläche 63 auf die erste Anschlagfläche 61, sodass die dritte Anschlagfläche 63 radial zur Achse L und parallel zur radial stehenden ersten Anschlagfläche 61 zu stehen kommt, was die ersten und zweiten Segmente 41, 42 in den Gewindeeingriff mit dem Gewindestab 2 bringt (s. Figuren 9 und 10).

Wird die Mutter in die proximale Richtung in die Freigabelage versetzt, in dem die Schwenkzapfen 43 im Gehäuseinnengewinde 31 nach aussen zur Gehäusewand 301 geführt werden, so trifft die vierte Anschlagfläche 64 auf die zweite radial stehende Anschlagfläche 62 und die vierte Anschlagfläche 64 wird radial gerichtet. Aufgrund der winkligen Anordnung der vierten Anschlagfläche 64 zur Längserstreckung des jeweiligen Segmentes 42 verschwenkt sich das jeweilige Segment 41, 42 von der Achse L weg und der Gewindeeingriff mit dem Gewindestab 2 wird aufgehoben, womit die Befestigungsvorrichtung 1 frei auf dem Gewindestab 2 verschiebbar ist (s. Figuren 11 und 12).

Aus diesen Figuren ist also ersichtlich, dass durch Betätigung des Winkelgetriebes 5 die Hülse 51 rotiert wird, was dazu führt, dass die durch die Schlitze 512 nach aussen in das Gewinde 31 einragenden Schwenkzapfen 43 zwischen der Eingriffslage und der Freigabelage hin und her geschraubt werden können. Sobald sich die Segmente 41, 42 mit ihren Vorsprüngen 410, bzw. 420 den Extremlagen nähern, kommt es zum Anschlag der Vorsprünge 410, 420 an der ersten oder zweiten radial stehenden Anschlagfläche 61, 62, wobei die Orientierung der dritten und vierten Anschlagfläche 63, 64 der Vorsprünge 410, 420 so gewählt ist, dass die Segmente 41, 42 bedarfsgerecht verschwenkt werden.

Es ist denkbar, dass eine der beiden Lagen der Mutter 4, das heisst die Spreizlage nach Fig. 9 oder die Parallellage nach Fig. 11, mittels eines Federmittels vorgespannt ist.

In einer besonders bevorzugten Ausführungsform sind zudem Federmittel 7 vorgesehen, welche derart angeordnet ist, dass, wenn man das Winkelgetriebe 5 bei in Eingriffslage liegender Mutter 4 in die Gegenrichtung, das heisst im Gegenuhrzeigersinn betätigt, die Schwenkzapfen 43 dann leicht den Weg aus der Ringnut 32 in das Gehäuseinnengewinde 31 finden.

**BEZUGSZEICHENLISTE**

| | | | |
|---|---|---|---|
| 1 | Befestigungsvorrichtung | 430 | Ausnehmung in 42 |
| 2 | Gewindestab | 5 | Betätigungselement, |
| 3 | Gehäuse | | Winkelgetriebe |
| 30 | Gehäuseinnenraum | 51 | Hülse |
| 301 | distales Ende von 30 | 510 | Hohlraum |
| 31 | Gehäuseinnengewinde | 511 | Tellerrad |
| 310 | eingriffslageseitige Ende von 31 | 5110 512 | Verzahnung von 511 Ausnahme, Schlitz |
| 311 | freigabelageseitige Ende von 31 | 513 | rohrförmiger Abschnitt von 51 |
| 32 | umlaufende Nut, Ringnut | 52 | Ritzel |
| 33 | Konusabschnitt | 520 | Ausnehmung für |
| 330 | Abwinklung | | Drehwerkzeug |
| 34 | Fortsatz | 521 | Ringnut |
| 340 | radialer Einschnitt | 522 | Verzahnung von 52 |
| 35 | Ausnehmung | 61 | erste Anschlagfläche |
| 4 | Mutter | 62 | zweite Anschlagfläche |
| 40 | Aufnahme für 2 | 63 | dritte Anschlagfläche |
| 41 | erstes Segment | 64 | vierte Anschlagfläche |
| 410 | erster Vorsprung auf 41 | | |
| 411 | erstes Segmentinnengewinde | 7 | Federmittel |
| 42 | zweites Segment | | |
| 420 | zweiter Vorsprung auf 42 | L | Längsachse =Abtriebsachse |
| 421 | zweites Segmentinnengewinde | M S | Antriebsachse Schwenkachse |
| 43 | Schwenkzapfen | | |

## Patentansprüche

1. Befestigungsvorrichtung (1) für einen Gewindestab (2) einer Sanitärbefestigung umfassend:
ein Gehäuse (3);
eine Mutter (4), welche im Gehäuse (3) um eine Abtriebsachse (L) der Befestigungsvorrichtung (1) drehbar und entlang der Abtriebsachse (L) zwischen einer Eingriffslage und einer Freigabelage verschiebbar im Gehäuse (3) angeordnet ist, wobei die besagte Mutter (4) aus zwei oder mehr relativ zueinander bewegbar angeordneten Segmenten (41;42) gebildet ist, wobei die zwei oder mehr Segmente (41;42) eine sich um die Abtriebsachse (L) erstreckende Aufnahme (40) für den Gewindestab (2) bilden und wobei zumindest eines der zwei oder mehr Segmente (41;42) als Gewindesegment (41;42) mit einem Segmentinnengewinde (411;421) ausgebildet ist; und
ein Betätigungselement (5), über welches die Mutter (4) um die Abtriebsachse (L) drehbar ist;
wobei
die Befestigungsvorrichtung (1) derart ausgebildet ist, dass die Mutter (4) durch Betätigung des Betätigungselements (5) unabhängig von dem Gewindestab (2) aus der Freigabelage in die Eingriffslage verschiebbar ist
und wobei das Betätigungselement (5) eine Hülse (51) umfasst, wobei die Hülse (51) von aussen drehbar antreibbar ist und einen Hohlraum (510) aufweist, und wobei die Mutter (4) entlang der Abtriebsachse (L) verschiebbar im Hohlraum (510) der Hülse (51) aufgenommen ist, **dadurch gekennzeichnet, dass** das zumindest eine Gewindesegment (41;42) oder mindestens eines der Gewindesegmente (41,42) durch mindestens einen, vorzugsweise durch zwei, radial zur Abtriebsachse (L) abragende und eine quer zur Abtriebsachse stehende Schwenkachse (S) bildende Schwenkzapfen (43) schwenkbar in der Hülse (51) und drehfest bezüglich einer Drehung um die Abtriebsachse (L) mit der Hülse (51) gelagert ist.

2. Befestigungsvorrichtung (1) nach Anspruch 1, welche weiter derart ausgebildet ist, dass die Mutter (4) durch Betätigung des Betätigungselements (5) unabhängig von dem Gewindestab (2) zwischen der Freigabelage und der Eingriffslage hin- und herschiebbar ist.

3. Befestigungsvorrichtung (1) nach einem der vorhergehenden Ansprüche, wobei das Betätigungselement (5) als Winkelgetriebe (5) ausgebildet ist,
wobei die Hülse (51) ein stirnseitig um den Hohlraum (510) angeordnetes Tellerrad (511) umfasst, und
wobei das Winkelgetriebe (5) ein von aussen antreibbares Ritzel (52) umfasst, welches mit dem Tellerrad (511) kämmt.

4. Befestigungsvorrichtung (1) nach einem der vorhergehenden Ansprüche, wobei die Hülse (51) für jeden Schwenkzapfen (43) eine entlang der Abtriebsachse (L) verlaufende Ausnehmung (512) aufweist, wobei diese mindestens eine Ausnehmung (512) vorzugsweise als Schlitz ausgebildet ist, in welche mindestens eine Ausnehmung (512) die Mutter (4) über den mindestens einen Schwenkzapfen (43) eingreifend relativ zur Hülse (51) und entlang der Abtriebsachse (L) verschiebbar gelagert ist.

5. Befestigungsvorrichtung (1) nach einem der vorhergehenden Ansprüche, wobei die Hülse (51) in einem Gehäuseinnenraum (30) des Gehäuses (3) angeordnet ist, wobei sich dieser Gehäuseinnenraum (30) entlang der Abtriebsachse (L) erstreckt und ein um die Abtriebsachse (L) verlaufendes Gehäuseinnengewinde (31) aufweist, und wobei der oder zumindest einer der Schwenkzapfen (43) über die Hülse (51) abragend in das Gehäuseinnengewinde (31) eingreift, sodass sich die Mutter (4), wenn sie dreht, über das Zusammenspiel zwischen dem mindestens einen Schwenkzapfen (43) und dem Gehäuseinnengewinde (31) relativ zur Hülse (51) entlang der Abtriebsachse (L) schraubt.

6. Befestigungsvorrichtung (1) nach einem der vorangehenden Ansprüche, wobei zumindest das zumindest eine Gewindesegment (41;42) einen radial bezüglich der Abtriebsachse (L) nach aussen ragenden Vorsprung (410;420) aufweist; und wobei die Befestigungsvorrichtung (1) eine erste Anschlagfläche (61) und eine beabstandet zur und gegen die erste Anschlagfläche (61) gerichtete zweite Anschlagfläche (62) bereitstellt,
wobei der Vorsprung (410,420) bei in Eingriffslage liegender Mutter (4) jeweils derart an der ersten Anschlagfläche (61) anschlägt, dass das mindestens eine Gewindesegment (41;42) in einer ersten Segmentlage liegt, so dass das mindestens eine Gewindesegment (41;42) bei eingeführtem Gewindestab (2) mit dem Gewindestab (2) in Gewindeeingriff liegt;
wobei der Vorsprung (410;420) bei in Freigabelage liegender Mutter (4) derart an der zweiten Anschlagfläche (62) anschlägt, dass das mindestens eine Gewindesegment (41;42) in einer zweiten Segmentlage liegt, so dass das mindestens eine Gewindesegment (41;42) bei eingeführtem Gewindestab (2) nicht mit dem Gewindestab (2) in Gewindeeingriff liegt.

7. Befestigungsvorrichtung (1) nach Anspruch 6, wobei der Vorsprung (44) eine dritte Anschlagfläche (63) zum Anschlag an der ersten Anschlagfläche (61) und eine der dritten Anschlagfläche (63) gegenüberliegende vierte Anschlagfläche (64) zum Anschlag an der zweiten Anschlagfläche (62) aufweist.

8. Befestigungsvorrichtung (1) nach Anspruch 1 und einem der Ansprüche 5 oder 7, wobei die erste Anschlagfläche (61) an oder in der Hülse (51) angeordnet ist und/oder wobei die zweite Anschlagfläche (62) an oder in der Hülse (51) oder am Gehäuse (3) angeordnet ist.

9. Befestigungsvorrichtung (1) nach einem der Ansprüche 6 bis 8, wobei die erste Anschlagfläche (61) senkrecht zur Abtriebsachse (L) liegt und die dritte Anschlagfläche (63) winklig zu einer Längserstreckung des entsprechenden mindestens einen Gewindesegments (41;42) steht.

10. Befestigungsvorrichtung (1) nach einem der Ansprüche 6 bis 9, wobei die dritte Anschlagfläche (63) und die vierte Anschlagfläche (64) geneigt zueinander stehen und/oder wobei die erste Anschlagfläche (61) und die zweite Anschlagfläche (62) parallel zueinander stehen.

11. Befestigungsvorrichtung (1) nach einem der Ansprüche 6 bis 10, wobei die erste, die zweite, die dritte und/oder die vierte Anschlagfläche (61;62;63;64) als Konusfläche(n) ausgebildet ist(sind).

12. Befestigungsvorrichtung (1) nach einem der vorhergehenden Ansprüche, wobei die Hülse (51) unverschiebbar entlang und drehbar um die Abtriebsachse (L) im Gehäuse (3) angeordnet ist; und/oder
wobei die Mutter (4) aus zwei Gewindesegmenten (41;42) als zweiteilige Spreizmutter ausgebildet ist, und /oder
wobei die Mutter (4) in der Eingriffslage näher an einer Mitte des Gehäuses (3) bezüglich der Abtriebsachse (L) liegt als in der Freigabelage.

13. Befestigungsvorrichtung (1) nach Anspruch 4 oder Befestigungsvorrichtung (1) nach Anspruch 4 und einem der Ansprüche 5 bis 12, wobei am eingrifflageseitigen Ende (310) des Gehäuseinnengewindes (31) eine umlaufende Nut gebildet ist, in welcher der mindestens eine Schwenkzapfen (43) bei in Eingriffslage liegender Mutter (4) verschiebungsfrei bezüglich der Hülse (51) mit der Mutter (4) in einem ersten Rotationssinn rotieren kann, wobei vorzugsweise Federmittel (7) zum Rückführen des mindestens einen Schwenkzapfens (43) aus der umlaufenden Nut (32) in das Gehäuseinnengewinde (31) bei Rotation mit einem dem ersten Rotationssinn entgegengesetzten zweiten Rotationssinn der Mutter (4) vorgesehen sind.

14. Befestigungsvorrichtung (1) nach einem der vorhergehenden Ansprüche, wobei der mindestens eine Schwenkzapfen (43) fest an einem ersten Gewindesegment (41) angeordnet ist und ein dem ersten Gewindesegment (41) gegenüber angeordnetes zweites Gewindesegment (42) mit einer korrespondierenden Ausnehmung (430) versehen ist, wobei der mindestens eine Schwenkzapfen (43) in diese Ausnehmung (430) eingreift und so das zweite Gewindesegment (42) um die gleiche Schwenkachse (S) schwenkbar relativ zum ersten Gewindeelement (41) am mindestens einen Schwenkzapfen (43) gelagert ist.

## Claims

1. Securing apparatus (1) for a threaded rod (2) of a sanitary fitting, comprising:
a housing (3);
a nut (4) which is arranged in the housing (3) so as to be able to be rotated about an output shaft (L) of the securing apparatus (1) and in the housing so as to be displaceable along the output shaft (L) between an engagement position and a release position, wherein said nut (4) is formed from two or more segments (41; 42) which are arranged so as to be able to be moved relative to each other, wherein the two or more segments (41; 42) form for the threaded rod (2) a receiving member (40) which extends around the output shaft (L) and wherein at least one of the two or more segments (41; 42) is constructed as a threaded segment (41; 42) with a segment inner thread (411; 421); and
an activation element (5), via which the nut (4) can be rotated about the output shaft (L);
wherein the securing apparatus (1) is constructed in such a manner that the nut (4) can be displaced by activating the activation element (5) independently of the threaded rod (2) from the release position into the engagement position,
and wherein the activation element (5) comprises a sleeve (51), wherein the sleeve (51) can be rotatably driven from the outer side and has a hollow space (510) and wherein the nut (4) is displaceably received along the output shaft (L) in the hollow space (510) of the sleeve (51), **characterised in that** the at least one threaded segment (41; 42) or at least one of the threaded segments (41, 42) is supported by at least one, preferably by two pivot pins (43) which protrude radially with respect to the output shaft (L) and which form a pivot axis (S) which is transverse relative to the output shaft, so as to be able to be pivoted in the sleeve (51) and so as to be rotationally secure with respect to a rotation about the output shaft (L) with the sleeve (51).

2. Securing apparatus (1) according to claim 1 which is further constructed in such a manner that the nut (4), by activating the activation element (5), can be pushed back and forth independently of the threaded rod (2) between the release position and the engagement position.

3. Securing element (1) according to either of the preceding claims, wherein the activation element (5) is constructed as an angular gear (5),
wherein the sleeve (51) comprises a ring gear (511) which is arranged at the end face around the hollow space (510), and
wherein the angular gear (5) comprises a pinion (52) which can be driven from the outer side and which meshes with the ring gear (511).

4. Securing apparatus (1) according to any one of the preceding claims, wherein the sleeve (51) has for each pivot pin (43) a recess (512) which extends along the output shaft (L), wherein this at least one recess (512) is preferably constructed as a slot, the nut engaging in said at least one recess (512) via the at least one pivot pin (43), and being supported so as to be able to be displaced relative to the sleeve (51) and along the output shaft (L).

5. Securing apparatus (1) according to any one of the preceding claims, wherein the sleeve (51) is arranged in an inner housing space (30) of the housing (3), wherein this inner housing space (30) extends along the output shaft (L) and comprises an inner housing thread (31) which extends around the output shaft (L), and wherein the or the at least one of the pivot pins (43), protruding over the sleeve (51), engages in the inner housing thread (31) so that the nut (4), when it rotates, is screwed along the output shaft (L) relative to the sleeve (51) via the cooperation between the at least one pivot pin (43) and the inner housing thread (31).

6. Securing apparatus (1) according to any one of the preceding claims, wherein at least the at least one threaded segment (41; 42) comprises a projection (410; 420) which protrudes outwardly radially with respect to the output shaft (L); and wherein the securing apparatus (1) has a first stop face (61) and a second stop face (62) which is spaced apart from and which is directed against the first stop face (62),
wherein the projection (410, 420), when the nut (4) is in the engagement position, in each case strikes the first stop face (61) in such a manner that the at least one threaded segment (41; 42) is arranged in a first segment position so that the at least one threaded segment (41; 42) is in threaded engagement with the threaded rod (2) when the threaded rod (2) is introduced;
wherein the projection (410; 420) when the nut (4) is located in the release position strikes the second stop face (62) in such a manner that the at least one threaded segment (41; 42) is arranged in a second segment position so that the at least one threaded segment (41; 42) is not in threaded engagement with the threaded rod (2) when the threaded rod (2) is introduced.

7. Securing apparatus (1) according to claim 6, wherein the projection (44) has a third stop face (63) for abutment against the first stop face (61) and a fourth stop face (64) opposite the third stop face (63) for abutment against the second stop face (62).

8. Securing apparatus (1) according to claim 1 and either claim 5 or claim 7, wherein the first stop face (61) is arranged on or in the sleeve (51) and/or wherein the second stop face (62) is arranged on or in the sleeve (51) or on the housing (3).

9. Securing apparatus (1) according to any one of claims 6 to 8, wherein the first stop face (61) is arranged perpendicularly to the output shaft (L) and the third stop face (63) is arranged at an angle with respect to a longitudinal extent of the corresponding at least one threaded segment (41; 42).

10. Securing apparatus (1) according to any one of claims 6 to 9, wherein the third stop face (63) and the fourth stop face (64) are located so as to be inclined relative to each other and/or wherein the first stop face (61) and the second stop face (62) are arranged parallel to each other.

11. Securing apparatus (1) according to any one of claims 6 to 10, wherein the first, the second, the third and/or the fourth stop face (61; 62; 63; 64) is/are constructed as conical face(s).

12. Securing apparatus (1) according to any one of the preceding claims, wherein the sleeve (51) is arranged in a non-displaceable manner along and in a rotatable manner about the output shaft (L) in the housing (3); and/or
wherein the nut (4) is formed from two threaded segments (41; 42) as a two-piece expanding nut, and/or
wherein the nut (4) is located in the engagement position closer to a centre of the housing (3) with respect to the output shaft (L) than in the release position.

13. Securing apparatus (1) according to claim 4 or securing apparatus (1) according to claim 4 and any one of claims 5 to 12, wherein at the end (310) of the inner housing thread (31) at the engagement position side there is formed a circumferential groove in which the at least one pivot pin (43) when the nut (4) is in the engagement position can rotate in a displacement-free manner with respect to the sleeve (51) with the nut (4) in a first rotation direction, wherein resilient means (7) for returning the at least one pivot pin (43) out of the circumferential groove (32) into the inner housing thread (31) in the event of rotation with a second rotation direction of the nut (4) counter to the first rotation direction are preferably provided.

14. Securing apparatus (1) according to any one of the preceding claims, wherein the at least one pivot pin (43) is securely arranged on a first threaded segment (41) and a second threaded segment (42) which is arranged opposite the first threaded segment (41) is provided with a corresponding recess (430), wherein the at least one pivot pin (43) engages in this recess (430) and the second threaded segment (42) is thus pivotably mounted about the same pivot axis (S) relative to the first threaded element (41) on the at least one pivot pin (43).

## Revendications

1. Dispositif de fixation (1) pour une tige filetée (2) d'une fixation sanitaire, comportant :
un boîtier (3);
un écrou (4), lequel peut tourner dans le boîtier (3) autour d'un axe de sortie (L) du dispositif de fixation (1) et est disposé dans le boîtier (3) de manière mobile le long de l'axe de sortie (L) entre une position d'entrée en prise et une position de libération, ledit écrou (4) étant formé à partir de deux ou plus de deux segments (41 ; 42) disposés de manière déplaçable les uns par rapport aux autres, les deux ou plus de deux segments (41 ; 42) formant un logement (40) pour la tige filetée (2), lequel logement s'étend autour de l'axe de sortie (L), et au moins l'un des deux ou plus de deux segments (41 ; 42) étant réalisé sous forme de segment fileté (41; 42) doté d'un premier filetage intérieur de segment (411 ; 421) ; et
un élément d'actionnement (5), par le biais duquel l'écrou (4) peut tourner autour de l'axe de sortie (L) ;
le dispositif de fixation (1) étant réalisé de telle sorte que l'écrou (4) est mobile de la position de libération à la position d'entrée en prise indépendamment de la tige filetée (2) par actionnement de l'élément d'actionnement (5),
et l'élément d'actionnement (5) comportant une douille (51), la douille (51) pouvant être entraînée en rotation depuis l'extérieur et comportant une cavité (510), et l'écrou (4) étant logé dans la cavité (510) de la douille (51) de manière mobile le long de l'axe de sortie (L), **caractérisé en ce que** l'au moins un segment fileté (41 ; 42) ou au moins l'un des segments filetés (41, 42) est monté de manière pivotante dans la douille (51) et de manière solidaire en rotation avec la douille (51) par rapport à une rotation autour de l'axe de sortie (L) au moyen d'au moins un, de préférence au moyen de deux tourillons de pivotement (43) dépassant radialement par rapport à l'axe de sortie (L) et formant un axe de pivotement (S) situé transversalement par rapport à l'axe de sortie.

2. Dispositif de fixation (1) selon la revendication 1, lequel est en outre réalisé de telle sorte que l'écrou (4) est mobile en va-et-vient entre la position de libération et la position d'entrée en prise indépendamment de la tige filetée (2) par actionnement de l'élément d'actionnement (5).

3. Dispositif de fixation (1) selon l'une des revendications précédentes, l'élément d'actionnement (5) étant réalisé sous forme d'engrenage angulaire (5),
la douille (51) comportant une couronne d'angle (511) disposée autour de la cavité (510) du côté frontal, et
l'engrenage angulaire (5) comportant un pignon (52) pouvant être entraîné depuis l'extérieur, lequel s'engrène avec la couronne d'angle (511).

4. Dispositif de fixation (1) selon l'une des revendications précédentes, la douille (51) comprenant, pour chaque tourillon de pivotement (43), un évidement (512) s'étendant le long de l'axe de sortie (L), cet au moins un évidement (512) étant réalisé de préférence sous forme de fente, dans lequel au moins un évidement (512) l'écrou (4) est monté mobile par rapport à la douille (51) et le long de l'axe de sortie (L) de manière à entrer en prise par le biais de l'au moins un tourillon de pivotement (43).

5. Dispositif de fixation (1) selon l'une des revendications précédentes, la douille (51) étant disposée dans un espace intérieur (30) du boîtier (3), cet espace intérieur de boîtier (30) s'étendant le long de l'axe de sortie (L) et comprenant un filetage intérieur de boîtier (31) s'étendant autour de l'axe de sortie (L), et le ou au moins l'un des tourillons de pivotement (43) venant en prise dans le filetage intérieur de boîtier (31) de manière à dépasser au-delà de la douille (51), de telle sorte que l'écrou (4), lorsqu'il tourne, se visse par rapport à la douille (51) le long de l'axe de sortie (L) par le biais de l'interaction entre l'au moins un tourillon de pivotement (43) et le filetage intérieur de boîtier (31).

6. Dispositif de fixation (1) selon l'une des revendications précédentes, au moins l'au moins un segment fileté (41 ; 42) comprenant une saillie (410 ; 420) dépassant vers l'extérieur radialement par rapport à l'axe de sortie (L) ; et le dispositif de fixation (1) fournissant une première surface de butée (61) et une deuxième surface de butée (62) orientée vers la première surface de butée (61) et espacée de celle-ci,
la saillie (410, 420) butant respectivement contre la première surface de butée (61) lorsque l'écrou (4) est dans la position d'entrée en prise, de telle sorte que l'au moins un segment fileté (41 ; 42) se situe dans une première position de segment, de sorte que l'au moins un segment fileté (41 ; 42) soit en prise par filetage avec la tige filetée (2) lorsque la tige filetée (2) est insérée ;
la saillie (410 ; 420) butant respectivement contre la deuxième surface de butée (62) lorsque l'écrou (4) est dans la position de libération, de telle sorte que l'au moins un segment fileté (41 ; 42) se situe dans une deuxième position de segment, de sorte que l'au moins un segment fileté (41 ; 42) ne soit pas en prise par filetage avec la tige filetée (2) lorsque la tige filetée (2) est insérée.

7. Dispositif de fixation (1) selon la revendication 6, la saillie (44) comprenant une troisième surface de butée (63) pour venir en butée contre la première surface de butée (61) et une quatrième surface de butée (64) en regard de la troisième surface de butée (63) pour venir en butée contre la deuxième surface de butée (62).

8. Dispositif de fixation (1) selon la revendication 1 et l'une des revendications 5 ou 7, la première surface de butée (61) étant disposée sur ou dans la douille (51) et/ou la deuxième surface de butée (62) étant disposée sur ou dans la douille (51) ou sur le boîtier (3).

9. Dispositif de fixation (1) selon l'une des revendications 6 à 8, la première surface de butée (61) se situant perpendiculairement à l'axe de sortie (L) et la troisième surface de butée (63) se situant suivant un angle par rapport à une étendue longitudinale de l'au moins un segment fileté (41 ; 42) correspondant.

10. Dispositif de fixation (1) selon l'une des revendications 6 à 9, la troisième surface de butée (63) et la quatrième surface de butée (64) étant inclinées l'une par rapport à l'autre et/ou la première surface de butée (61) et la deuxième surface de butée (62) étant parallèles l'une à l'autre.

11. Dispositif de fixation (1) selon l'une des revendications 6 à 10, la première, la deuxième, la troisième et/ou la quatrième surface de butée (61 ; 62 ; 63 ; 64) étant réalisée(s) sous forme de surface(s) conique (s) .

12. Dispositif de fixation (1) selon l'une des revendications précédentes, la douille (51) étant disposée dans le boîtier (3) de manière non mobile le long de l'axe de sortie (L) et de manière à pouvoir tourner autour de celui-ci ; et/ou
l'écrou (4) étant réalisé à partir de deux segments filetés (41 ; 42) sous forme d'écrou expansible en deux parties, et/ou
l'écrou (4) se situant plus près d'un centre du boîtier (3) par rapport à l'axe de sortie (L) dans la position d'entrée en prise que dans la position de libération.

13. Dispositif de fixation (1) selon la revendication 4 ou dispositif de fixation (1) selon la revendication 4 et l'une des revendications 5 à 12, une rainure périphérique étant formée à l'extrémité (310) côté position d'entrée en prise du filetage intérieur de boîtier (31), rainure dans laquelle l'au moins un tourillon de pivotement (43) peut tourner avec l'écrou (4) dans un premier sens de rotation sans coulissement par rapport à la douille (51) lorsque l'écrou (4) se situe dans la position d'entrée en prise, des moyens élastiques (7) servant au rappel de l'au moins un tourillon de pivotement (43) hors de la rainure périphérique (32) dans le filetage intérieur de boîtier (31) lors de la rotation suivant un deuxième sens de rotation de l'écrou (4) opposé au premier sens de rotation étant de préférence prévus.

14. Dispositif de fixation (1) selon l'une des revendications précédentes, l'au moins un tourillon de pivotement (43) étant disposé fixement sur un premier segment fileté (41) et un deuxième segment fileté (42) en regard du premier segment fileté (41) étant doté d'un évidement (430) correspondant, l'au moins un tourillon de pivotement (43) venant en prise dans cet évidement (430) et le deuxième segment fileté (42) étant ainsi monté pivotant par rapport au premier élément fileté (41) sur au moins un tourillon de pivotement (43) autour du même axe de pivotement (S).
